# EUROPEAN PATENT SPECIFICATION

(11) **EP 2 328 962 B1**
(45) Date of publication and mention of the grant of the patent: **06.01.2016**
(21) Application number: 09782343.9
(22) Date of filing: 28.08.2009
(51) Int. Cl.: C08K 5/134, C08L 65/02

(54) **THERMALLY STABILIZED POLYARYLENE COMPOSITIONS**
THERMISCH STABILISIERTE POLYARYLENZUSAMMENSETZUNG
COMPOSITIONS DE POLYARYLÈNE THERMIQUEMENT STABILISÉES

(30) Priority: 29.08.2008 US 92866 P; 29.08.2008 US 92870 P
(43) Date of publication of application: 08.06.2011
(73) Proprietor: Solvay Specialty Polymers USA, LLC., Alpharetta, GA 30005 (US)
(72) Inventor: SRIRAM, Suresh, Alpharetta Georgia 30022 (US); CLARK, Bruce, J., Winder Georgia 30680 (US); PLITHIDES, Gregory, C., Norcross Georgia 30092 (US)
(74) Representative: Benvenuti, Federica
(86) International application number: PCT/EP2009/061145
(87) International publication number: WO 2010/023281

(56) References cited:
- WO-A-82/04057
- WO-A-2007/101852
- US-A- 3 952 072
- US-A- 4 184 999
- US-A1- 2002 040 081
- US-B1- 6 214 909

## Description

### BACKGROUND OF THE INVENTION

### FIELD OF THE INVENTION

The invention relates to a polyarylene composition containing a sterically hindered phenolic stabilizer. The polyarylene composition has improved physical properties such as improved color consistency, toughness, surface appearance and flow characteristics. The invention further relates to articles such as injection moldings made from the polyarylene composition and processes for making articles from the polyarylene composition.

### DESCRIPTION OF THE RELATED ART

Rigid rod polymers such as polyarylenes and polyphenylenes are often referred to as self-reinforced polymers (SRPs). Polyarylene polymers have the desirable properties of engineering thermoplastics while concurrently offering the advantages of reinforced thermoplastic materials. Self-reinforced polyarylenes may avoid problems associated with surface finish and homogeneity which are often encountered with conventional reinforced polymers. Self-reinforced polyarylenes are inherently able to provide improved mechanical properties because of their relatively rigid polymer backbone which, in some respects, mimics a fibrous reinforcing agent.

Some of the properties inherent in polyarylene materials, e.g., the polyarylene's self-reinforcing properties, are at least partially responsible for desirable physical properties such as high modulus, high tensile strength and good toughness. On the other hand, these properties may make it difficult to process a polyarylene under typical molding and extrusion conditions.

Processing includes injection molding, compression molding and/or extrusion molding the polyarylene to form molded parts and/or stock parts. During injection molding, the polyarylene polymer is subjected to high temperatures and high pressures in an atmosphere that may contain oxygen and/or common atmospheric contaminants. During processing the polyarylene is both at high temperature and in molten form. Under such conditions polyarylenes may be susceptible to undesirable discoloration such as yellowing and darkening of the polymer.

Polyarylene materials may be susceptible to discoloration when undergoing processing. For example, polyarylenes containing structural units based on benzophenone may discolor during processing to form an initially purple-colored material which takes on a dark brownish yellow appearance after exposure to air and/or aging. Such processing may also lead to the formation of streaks of dark brown coloration.

### SUMMARY OF THE INVENTION

One aspect of the invention is a polyarylene composition that includes one or more polyarylenes (P1) and one or more sterically hindered phenolic stabilizers (HPS) as defined in claim 1.

Another aspect of the invention is a polyarylene composition that exhibits improved color consistency, improved physical properties and/or improved processability.

Another aspect of the invention is a polyarylene composition containing a sterically hindered phenolic compound having improved color consistency and processability.

Another aspect of the invention is a polyarylene composition having improved processability, melt flow rate and/or strain at break.

Another aspect of the invention is a process for making a molding from a polyarylene composition containing one or more sterically hindered phenol stabilizers as defined in claim 12.

Another aspect of the present invention is related to articles made of the invented polyarylene composition that includes one or more polyarylenes (P1) and one or more sterically hindered phenolic stabilizers (HPS) as defined in claim 13.

### BRIEF DESCRIPTION OF THE DRAWING

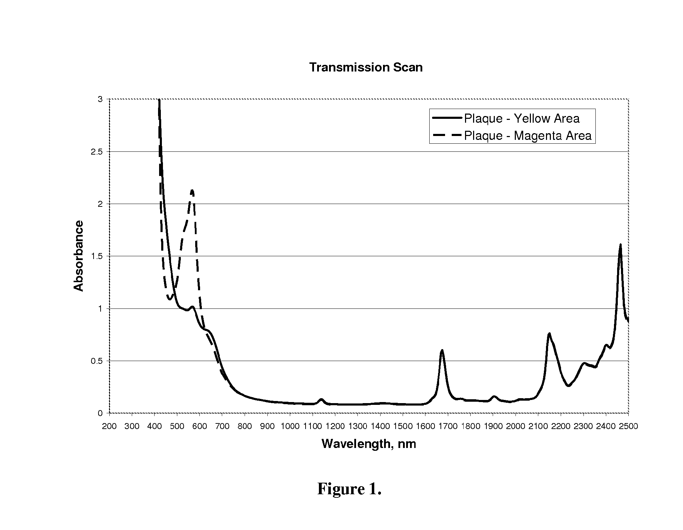

FIG. 1 shows a UV-Vis trace of the yellow and purple areas of a compression molded polyarylene plaque.

### DETAILED DESCRIPTION OF THE PREFERRED EMBODIMENTS

A polyarylene (P1) such as a polyphenylene polymer may have properties that provide good toughness. Some of these properties may be at least in part a consequence of the rigid polymer backbone characteristics of some polyarylene compounds. The rigid polyarylene polymer mimics a fiber reinforcing agent and thereby provides self-reinforcing characteristics to a polyarylene composition.

The toughness and self-reinforcing characteristics of polyarylenes may have a detrimental effect on the processability of compositions containing the polyarylene material. For example, polyarylenes may have low melt flow characteristics and may be susceptible to degradation under process conditions in which the polyarylene is melted and subjected to high pressure. These characteristics may require that higher than normal temperatures and/or pressures are necessary in order to injection mold and/or otherwise process some polyarylene materials. Subjecting the underlying polyarylene composition to higher temperatures and/or pressures places the polymer under greater stress which in turn may result in greater susceptibility to decomposition and/or discoloration by reaction with atmospheric components such as oxygen. Such processing conditions may result in a yellowing and darkening of the polyarylene composition.

The inventors have discovered that the cause of discoloration in polyarylene compositions (such as those containing the polyarylene (P1) described herein) is due to the formation of a radical specie that imparts a deep purple color to the polyarylene and can undergo further reaction to produce other undesirable color effects. The inventors have further discovered that the inclusion of sterically hindered phenol (phenolic) stabilizers (HPS) substantially reduces the tendency of polyarylene polymers to undergo discoloration during processing and, further, reduces the degree of degradation that a polyarylene polymer undergoes during processing.

Some polyarylene polymers undergo color changes upon melting and/or processing such as injection molding. Discoloration may involve a noticeable change of color, perceptible by the human eye, so that an undyed and unpigmented polyarylene composition takes on hues of purple, green, yellow-green, yellow, dark blue and/or black. Similar discoloration has been observed in other thermoplastic materials and is typically a result of metallic impurities present in the polymer compositions. Polyarylene compositions may exhibit such discoloration even in the absence of any significant amount of metallic impurities.

The inventors have further discovered that benzophenone-containing polyarylenes are especially susceptible to color degradation. During processing, the benzophenone moiety of a polyarylene may adopt a radical form also known as a ketyl. Although benzophenone and benzophenone-functionalized polyarylenes are typically colorless, a benzophenone structural unit of the polyarylene in ketyl form takes on a deep blue-purple color. This color is due to the formation of a ketyl radical which has an absorption in a visible spectrum at about 540 nm. Such ketyl radical species are thought to be responsible for blue/purple discoloration but, prior to the inventors' work, had not been shown to directly contribute to yellowing.

Ketyl radicals are known to be reactive under normal atmospheric conditions. For example, ketyl radicals may react with any of water, oxygen or other components and air to form other chemical species. The formation of other chemical species such as phenolic compounds may lead to problems later when the phenolic compound-containing polyarylene is subjected to processing. As already mentioned above, during processing, the polyarylene is in molten form. The molten polyarylene is in constant contact with the atmosphere. Different components of the atmosphere such as oxygen subject the polyarylene to an oxidizing environment. The oxidation of phenolic hydroxyl groups at high temperature leads to discoloration, particularly the formation of an undesirable yellow and/or light brown color.

The inventors have further discovered that benzophenone ketyl species can couple to form a pinacol. A pinacol is a dihydroxy compound which can dehydrate under high temperature molding condition to form double bonds. This internal double bond can be a source of crosslinking under conditions of heat and/or pressure, e.g., when in the polyarylene composition is in molten form during processing such as in the barrel of a molding machine.

Subjecting polyarylene compositions including a polyarylene having structural units derived from a benzophenone-monomer unit to injection molding at temperatures of about 680°F provides injection molded parts having a purple color. The purple color is attributed to the formation of ketyl radicals in the polymer. Aging the molded parts in an ambient atmosphere for a period of days results in a color change from purple to yellowish. Reducing the temperature at which the molded part is formed by injection molding leads to a consequent reduction in the degree of discoloration (i.e., purple discoloration after molding and yellow discoloration after aging) in the molded parts. Further decreasing the processing temperature to around 620°F together with a concurrent reduction in residence time (e.g., the time during which the polyarylene material is subjected to elevated temperature such as 600°F), leads to further reductions in the purple and yellow discolorations observed for the molded article sample.

Further lowering the processing temperature and/or residence time does not result in complete elimination of the purple and/or yellow discoloration. Even the use of an inert gas blanket such as nitrogen may not be sufficient for obtaining a further reduction in color.

Based on the inventors' discovery that the formation of ketyl radicals during processing leads to color formation, the inventors sought a method of mitigating discoloration in polyarylene materials. The inventors further discovered that the inclusion of sterically hindered phenol stabilizers in polyarylene compositions is an effective means to improve color consistency, color stability and concurrently improve physical properties in polyarylene materials.

A first aspect of the present invention is thus related to a polyarylene composition, comprising:
one or more polyarylenes (P1), and
one or more sterically hindered phenolic stabilizer which is an esterified hindered phenol substituted acid stabilizer.

Including a sterically hindered phenolic stabilizer in polyarylene compositions provides thermoplastic compositions that have significantly improved initial color, significantly improved color stability and significantly improved color consistency, and optionally improved physical properties such as strain at break and modulus. Surprisingly, only certain stabilizers, namely sterically hindered phenolic stabilizers, were highly useful for improving color, and still more surprisingly, these stabilizers improved also substantially the melt flow rate and surface finish in molded parts in polyarylene compositions. Other stabilizers such as phosphite-type stabilizers may be effective for improving color in other thermoplastic compositions but such stabilizers alone do not provide the significant improvements in color, melt flow rate, modulus, surface finish, and strain at break associated with the sterically hindered phenolic stabilizer-containing composition of the invention.

The polyarylene composition shows an improvement in yellowness index of at least 10% in comparison to the yellowness index of a like composition that does not contain the sterically hindered phenolic stabilizer. The improvement in yellowness index is the decrease in yellowness index relative to the yellowness index of the same polyarylene composition without the sterically hindered phenolic stabilizer.
Preferably the improvement in yellowness index is at least 20%, 30%, 40%, 50%, 60%, 70%, 80%, 90%, 100%, 150%, or at least 200%.

The polyarylene composition of the invention may exhibit improved surface finish in molded parts. For example, the polyarylene composition of the invention may show much less splay, tiger stripes, blush, flow lines and/or other undesirable surface effects in comparison to the polyarylene compositions that do not contain the sterically hindered phenolic stabilizer.

In one embodiment of the invention the polyarylene composition undergoes less than 1 mol% of crosslinking during processing, e.g., during an injection molding, compression molding or extrusion molding. Preferably, less than 0.5 mol% of the polyarylene composition undergoes crosslinking during processing, more preferably less than 0.25 mol%, 0.1 mol%, 0.05 mol%, 0.01 mol%, 0.005 mol%, 0.001 mol%, 0.0005 mol%, 0.0001 mol%, 0.00005 mol%, or less than 0.00001 mol%.

In an embodiment of the invention the modulus of the polyarylene composition is improved, e.g., increases, by at least 2% in comparison to the modulus of the polyarylene composition without the sterically hindered phenolic stabilizer. Preferably, the modulus is improved by at least 3%, 4%, 5%, 10%, 15%, 20%, or at least 25%.

In an embodiment of the invention the strain at break of the polyarylene composition is improved, e.g., increases, by at least 10% in comparison to the strain at break of the polyarylene composition without the sterically hindered phenolic stabilizer. Preferably, the strain at break is improved by at least 15%, 20%, 30%, 40%, 50%, 60%, 70%, 80%, 90%, 100%, 150%, or at least 200%.

### The polyarylene (P1)

For the purpose of the present invention, an arylene group is a hydrocarbon divalent group consisting of one core composed of one benzenic ring or of a plurality of benzenic rings fused together by sharing two or more neighboring ring carbon atoms, and of two ends.

Non limitative examples of arylene groups are phenylenes, naphthylenes, anthrylenes, phenanthrylenes, tetracenylenes, triphenylylenes, pyrenylenes, and perylenylenes. The arylene groups (especially the numbering of the ring carbon atoms) were named in accordance with the recommendations of the CRC Handbook of Chemistry and Physics, 64^{th} edition, pages C1-C44, especially p. C11-C12, incorporated herein by reference.

Arylene groups present usually a certain level of aromaticity; for this reason, they are often reported as "aromatic" groups. The level of aromaticity of the arylene groups depends on the nature of the arylene group ; as thoroughly explained in Chem. Rev. 2003, 103, 3449-3605, "Aromaticity of Polycyclic Conjugated Hydrocarbons", the level of aromaticity of a polycyclic aromatic hydrocarbon can be notably quantified by the "index of benzene character" B, as defined on p. 3531 of the same paper; values of B for a large set of polycyclic aromatic hydrocarbon are reported on table 40, same page, incorporated herein by reference.

An end of an arylene group is a free electron of a carbon atom contained in a (or the) benzenic ring of the arylene group, wherein an hydrogen atom linked to said carbon atom has been removed. Each end of an arylene group is capable of forming a linkage with another chemical group. An end of an arylene group, or more precisely the linkage capable of being formed by said end, can be characterized by a direction and by a sense; to the purpose of the present invention, the sense of the end of an arylene group is defined as going from the inside of the core of the arylene group to the outside of said core. As concerns more precisely arylene groups the ends of which have the same direction, such ends can be either of the same or opposite sense; also, their ends can be in the straight foregoing of each other, or not (otherwise said, they can be disjoint).

A polyarylene is intended to denote a polymer of which more than 50 wt. % of the recurring units are recurring units (R1) of one or more formulae consisting of an optionally substituted arylene group, provided said optionally substituted arylene group is linked by each of its two ends to two other optionally substituted arylene groups via a direct C-C linkage. That the optionally substituted arylene group is linked by each of its two ends to two other optionally substituted arylene groups via a direct C-C linkage, is an essential feature of the recurring units (R1) ; thus, an arylene recurring unit which is linked by at least one of its two ends to a group other than an arylene group such as phenylene recurring units ϕ₁, ϕ₂ and ϕ_{2'} below :
-O-ϕ₁-S(=O)₂-,
-O-ϕ₂₋ϕ₂-O-
are not recurring units (R1) in the sense of the present invention.

The arylene groups of which the recurring units (R1) consist can be unsubstituted. Alternatively, they can be substituted by at least one monovalent substituting group.

The monovalent substituting group is usually not polymeric in nature ; its molecular weight is preferably below 500, more preferably below 300, still more preferably below 200 and most preferably below 150.

The monovalent substituting group is advantageously a solubilizing group. A solubilizing group is one increasing the solubility of the polyarylene (P1) in at least one organic solvent, in particular in at least one of dimethylformamide, N-methylpyrrolidinone, hexamethylphosphoric triamide, benzene, tetrahydrofuran and dimethoxyethane, which can be used as solvents during the synthesis of the polyarylene (P1) by a solution polymerization process.

The monovalent substituting group is also advantageously a group which increases the fusibility of the polyarylene (P1), i.e. it lowers its glass transition temperature and its melt viscosity, so as to desirably make the polyarylene (P1) suitable for thermoprocessing.

Preferably, the monovalent substituting group is chosen from :
- hydrocarbyls such as alkyls, aryls, alkylaryls and aralkyls ;
- halogenos such as -Cl, -Br, -F and -I ;
- hydrocarbyl groups partially or completely substituted by at least one halogen atom such as halogenoalkyls, halogenoaryls, halogenoalkylaryls and halogenoaralkyls ;
- hydroxyl;
- hydrocarbyl groups substituted by at least one hydroxyl group, such as hydroxyalkyls, hydroxyaryls, hydroxyalkylaryls and hydroxyaralkyls ;
- hydrocarbyloxys [-O-R, where R is a hydrocarbyl group], such as alkoxys, aryloxys, alkylaryloxys and aralkyloxys ;
- amino (-NH₂) ;
- hydrocarbyl groups substituted by at least one amino group, such as aminoalkyls and aminoaryls ;
- hydrocarbylamines [-NHR or -NR₂, where R is a hydrocarbyl group] such as alkylamines and arylamines ;
- carboxylic acids and their metal or ammonium salts, carboxylic acid halides, carboxylic anhydrides ;
- hydrocarbyl groups substituted by at least one of carboxylic acids, metals or ammonium salts thereof, carboxylic acid halides and carboxylic anhydrides, such as -R-C(=O)OH where R is an alkyl or an aryl group ;
- hydrocarbylesters [-C(=O)OR or -O-C(=O)R, where R is a hydrocarbyl group] such as alkylesters, arylesters, alkylarylesters and aralkylesters ;
- amido [-C(=O)NH₂];
- hydrocarbyl groups substituted by at least one amido group ;
- hydrocarbylamide monoesters [-C(=O)NHR or -NH-C(=O)-R, where R is a hydrocarbyl group], such as alkylamides, arylamides, alkylarylamides and aralkylamides, and hydrocarbylamide diesters [-C(=O)NR₂ or -N-C(=O)R₂, where R are hydrocarbyl groups], such as dialkylamides and diarylamides ;
- sulfinic acid (-SO₂H), sulfonic acid (-SO₃H), their metal or ammonium salts,
- hydrocarbylsulfones [-S(=O)₂-R, where R is the hydrocarbyl group], such as alkylsulfones, arylsulfones, alkylarylsulfones, aralkylsulfones ;
- aldehyde [-C(=O)H] and haloformyls [-C(=O)X, wherein X is a halogen atom] ;
- hydrocarbylketones [-C(=O)-R, where R is a hydrocarbyl group], such as alkylketones, arylketones, alkylarylketones and aralkylketones ;
- hydrocarbyloxyhydrocarbylketones [-C(=O)-R¹-O-R², where R¹ is a divalent hydrocarbon group such as an alkylene, an arylene, an alkylarylene or an aralkylene, preferably a C₁-C₁₈ alkylene, a phenylene, a phenylene group substituted by at least one alkyl group, or an alkylene group substituted by at least one phenyl group ; and R² is a hydrocarbyl group, such as an alkyl, aryl, alkylaryl or aralkyl group], such as alkyloxyalkylketones, alkyloxyarylketones, alkyloxyalkylarylketones, alkyloxyaralkylketones, aryloxyalkylketones, aryloxyarylketones, aryloxyalkylarylketones and aryloxyaralkylketones ;
- any of the above groups comprising at least one hydrocarbyl group or a divalent hydrocarbon group R¹, wherein said hydrocarbyl group or said R¹ is itself substituted by at least one of the above listed monovalent substituting groups, e.g. an arylketone -C(=O)-R, where R is an aryl group substituted by one hydroxyl group ;
where :
- the hydrocarbyl groups contain preferably from 1 and 30 carbon atoms, more preferably from 1 to 12 carbon atoms and still more preferably from 1 to 6 carbon atoms ;
- the alkyl groups contain preferably from 1 to 18 carbon atoms, and more preferably from 1 to 6 carbon atoms ; very preferably, they are chosen from methyl, ethyl, n-propyl, isopropyl, n-butyl, isobutyl and tert-butyl ;
- the aryl groups are defined as monovalent groups consisting of one end and one core composed of one benzenic ring (such the phenyl group) or of a plurality of benzenic rings directly linked to each other via a carbon-carbon linkage (such as the biphenyl group) or fused together by sharing two or more neighboring ring carbon atoms (such as the naphthyl groups), and wherein the ring carbon atoms are possibly substituted by at least one nitrogen, oxygen or sulfur atom ; preferably, in the aryl groups, no ring carbon atom is substituted;
- the aryl groups contain preferably from 6 to 30 carbon atoms ; more preferably, they are phenyl groups ;
- the alkyl group which is contained in the alkylaryl groups meets the preferences of the alkyl groups as above expressed ;
- the aryl group which is contained in the aralkyl groups meets the preferences of the aryl groups as above expressed.

More preferably, the monovalent substituting group is chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being unsubstituted or substituted by at least one of the above listed monovalent substituting groups.

Still more preferably, the monovalent substituting group is chosen from arylketones and aryloxyarylketones, said arylketones and aryloxyarylketones being unsubstituted or substituted by at least one of the above listed monovalent substituting groups.

Most preferably, the monovalent substituting group is an (unsubstituted) arylketone, in particular it is phenylketone [-C(=O)-phenyl]. The core of the optionally substituted arylene group of the recurring units (R1) is composed of preferably at most 3, more preferably at most 2, and still more preferably at most one benzenic ring. Then, when the core of the optionally substituted arylene group of the recurring units (R1) is composed of one benzenic ring, the recurring units (R1) are of one or more formulae consisting of an optionally substituted phenylene group, provided said optionally substituted phenylene group is linked by each of its two ends to two other optionally substituted arylene groups via a direct C-C linkage.

As above explained, the optionally substituted arylene group of the recurring units (R1) is linked by each of its two ends to two other optionally substituted arylene groups via a direct C-C linkage. Preferably, it is linked by each of its two ends to two other optionally substituted phenylene groups via a direct C-C linkage.

As also above explained, both ends of the optionally substituted arylene group of the recurring units (R1) can be characterized notably by a direction and by a sense.

A first set of recurring units suitable as recurring units (R1) is composed of optionally substituted arylene groups, the ends of which
- have the same direction,
- are of opposite sense, and
- are in the straight foregoing of each other
[hereafter, rigid rod-forming arylene units (R1-a)].

Non limitative examples of such optionally substituted arylene groups include :

| | |
|---|---|
| 1,4-phenylene (also named p-phenylene) | 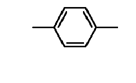 |
| 1,4-naphthylene | 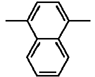 |
| 1,4-phenanthrylene and 2,7-phenanthrylene | 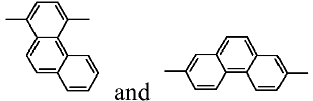 |
| 1,4-anthrylene and 9,10-anthrylene | 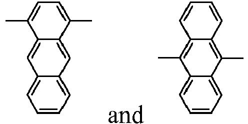 |
| 2,7-pyrenylene | 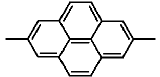 |
| 1,4-naphthacenylene and 5,12-naphthacenylene | 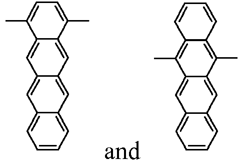 |
| 1,4-chrysenylene | 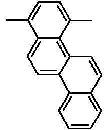 |
| 1,4-triphenylylene and 2,7-triphenylylene | 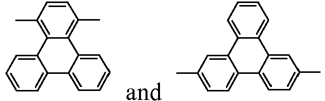 |
| 1,4-pentacenylene, 5,14-pentacenylene and 6,13-pentacenylene | 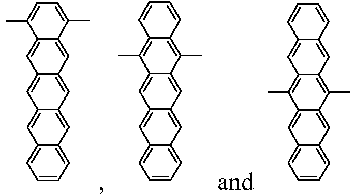 |
| 1,6-coronenylene | 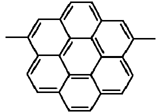 |
| 1,4-trinaphthylenylene, 2,9-trinaphthylenylene and 5,18-trinaphthylenylene | 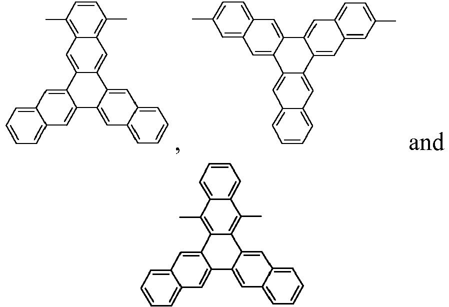 |

and any of these groups substituted by at least one monovalent substituting group, as above defined, in particular by a phenylketone group.
Good results were obtained when recurring units (R1-a) are optionally substituted p-phenylenes.

Recurring units (R1-a), when contained in the polyarylene (P1), result in straight polymer chains exhibiting an outstanding rigidity. For this reason, such polyarylenes (P1) are commonly referred to as "rigid-rod polymers".

A second set of recurring units suitable as recurring (R1) is composed of optionally substituted arylene groups, the ends of which
- either have a different direction, forming thus together an angle between 0 and 180°, said angle being possibly acute or obtuse,
- or have the same direction and the same sense,
- or have the same direction, are of opposite sense and are disjoint (i.e. not in the straight foregoing of each other)
[globally hereafter referred to as kink-forming arylene units (R1-b)].

Then, a first subset of recurring units (R1-b) suitable as recurring units (R1) is composed of optionally substituted arylene groups, the ends of which have a different direction, forming together an acute angle [recurring units (R1-b1)]. Non limitative examples of optionally substituted arylene groups the ends of which have a direction different from each other, include :

| | |
|---|---|
| 1,2-phenylene (or o-phenylene) | 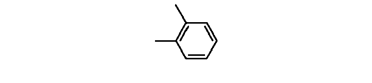 |
| 1,2-, 2,3- and 1,7-naphthylenes | 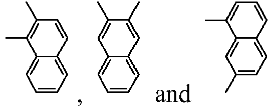 |
| 1,2-, 1,8-, 1,9-, 2,3-, 2,5- and 2,10-phenanthrylenes | 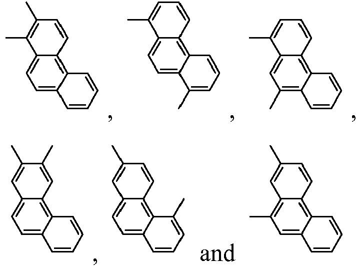 |
| 1,2- and 1,7-anthrylenes | 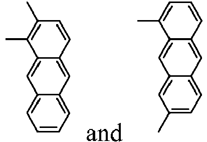 |

and any of these groups substituted by at least one monovalent substituting group, as above defined, in particular by a phenylketone group.

A second subset of recurring units (R1-b) suitable as recurring units (R1) is composed of optionally substituted arylene groups, the ends of which have a different direction, forming together an obtuse angle [recurring units (R1-b2)]. Non limitative examples of optionally substituted arylene groups the ends of which have a direction different from each other, include :

| | |
|---|---|
| 1,3-phenylene (or m-phenylene) | 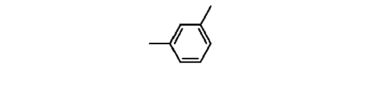 |
| 1,3 - and 1,6-naphtylenes | 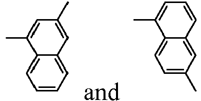 |
| 1,3-, 1,5-, 1,7-, 2,4-, 2,9- and 3,10- phenanthrylenes | 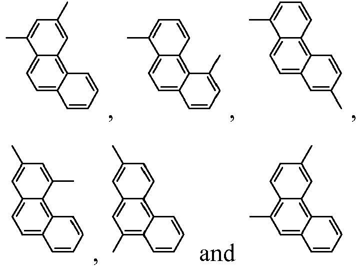 |
| 1,3- and 1,6-anthrylenes | 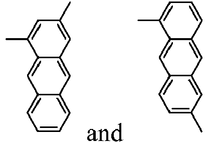 |

and any of these groups substituted by at least one monovalent substituting group, as above defined, in particular by a phenylketone group.

A third subset of recurring units (R1-b) is composed of optionally substituted arylene groups, the ends of which have the same direction and the same sense [recurring units (R1-b3)]. Non limitative examples of optionally substituted arylene groups the ends of which the same direction and the same sense include :

| | |
|---|---|
| 1,8-naphthylene | 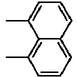 |
| 1,10- and 3,5-phenanthrylenes | 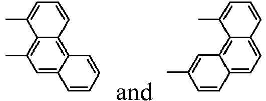 |
| 1,8- and 1,9-anthrylenes | 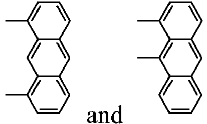 |

and any of these groups substituted by at least one monovalent substituting group, as above defined, in particular by a phenylketone group.

A fourth subset of recurring units (R1-b) is composed of optionally substituted arylene groups, the ends of which have the same direction, are of opposite sense and are disjoint [recurring units (R1-b4)]. Non limitative examples of such optionally substituted arylene groups include :

| | |
|---|---|
| 1,5- and 2,6-naphtylenes | 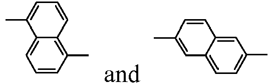 |
| 1,6-, 3,9- and 4,10-phenanthrylenes | 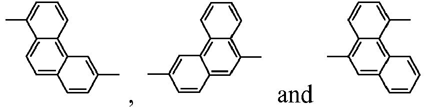 |
| 1,5-, 1,10- and 2,6-anthrylenes | 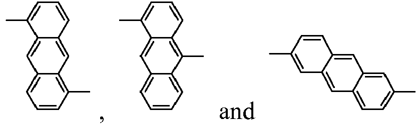 |

and any of these groups substituted by at least one monovalent substituting group, as above defined, in particular by a phenylketone group. Preferably, recurring units (R1-b) are chosen from recurring units (R1-b1), recurring units (R1-b2) and recurring units (R1-b4). More preferably, recurring units (R1-b) are chosen from recurring units (R1-b1) and recurring units (R1-b2). Still more preferably, recurring units (R1-b) are chosen from recurring units (R1-b1). Good results were obtained when recurring units (R1-b) are optionally substituted m-phenylenes.

Recurring units (R1-b), when contained in the polyarylene (P1), result in more or less kinked polymer chains, exhibiting a higher solubility and fusibility than straight polymer chains. For this reason, such polyarylenes (P1) are commonly referred to as "kinked polymers".

Recurring units (R1) are preferably chosen from :
- recurring units (R1-a) which are substituted by at least one monovalent substituting group [choice (A)] ; and
- mixes of recurring units (R1-a), which can be substituted or not by at least one monovalent substituting group, with recurring units (R1-b), which can be substituted or not by at least one monovalent substituting group [choice (B)].

Choice (B) is generally more preferred than choice A.

### Choice (A)

Recurring units of choice (A) are recurring units (R1-a) which are substituted by at least one monovalent substituting group.

Said recurring units are preferably p-phenylenes substituted by at least one monovalent substituting group.

Very preferably, they are p-phenylenes substituted by at least one monovalent substituting group chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being themselves unsubstituted or substituted by at least one monovalent substituting group as those above listed.

Still more preferably, they are p-phenylenes substituted by at least one monovalent substituting group chosen from arylketones and aryloxyarylketones, said arylketones and aryloxyarylketones being unsubstituted or substituted by at least one monovalent substituting group as those above listed.

Most preferably, they are p-phenylenes substituted by an arylketone group, in particular by the phenylketone group.

### Choice (B)

Recurring units of choice (B) are a mix of recurring units (R1-a), which can be substituted or not by at least one monovalent substituting group, with recurring units (R1-b), which can be substituted or not by at least one monovalent substituting group. When such a mix of recurring units is contained in the polyarylene (P1), said polyarylene (P1) is commonly referred to as "a kinked rigid-rod polymer".

The recurring units of choice (B) are preferably a mix (MB) of recurring units (R1-a) chosen from optionally substituted p-phenylenes, with recurring units (R1-b) chosen from (i) optionally substituted m-phenylenes and (ii) mixes of optionally substituted m-phenylenes with optionally substituted o-phenylenes.

The recurring units (R1-a) of the mix (MB) are preferably p-phenylene units substituted by at least one substituting group. More preferably, the recurring units (R1-a) of the mix (MB) are p-phenylenes substituted by at least one monovalent substituting group chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being themselves unsubstituted or substituted by at least one monovalent substituting group as those above listed. Still more preferably, the recurring units (R1-a) of the mix (MB) are p-phenylenes substituted by at least one monovalent substituting group chosen from arylketones and aryloxyarylketones, said arylketones and aryloxyarylketones being unsubstituted or substituted by at least one monovalent substituting group as those above listed. Most preferably, they are p-phenylenes substituted by an arylketone group, in particular by the phenylketone group.

Essentially all, if not all, the recurring units (R1-b) of the mix (MB) are m-phenylene units optionally substituted by at least one substituting group. More preferably, essentially all, if not all, the recurring units (R1-b) of the mix (MB) are m-phenylene units which are optionally substituted by at least one monovalent substituting group chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being themselves unsubstituted or substituted by at least one monovalent substituting group as those above listed. Still more preferably, essentially all, if not all, the recurring units (R1-b) of the mix (MB) are unsubstituted m-phenylene units. Most preferably, all the recurring units (R1-b) are m-phenylene units.

In the mix (MB), the mole ratio of the recurring units (R1-b), based on the total number of moles of the recurring units (R1-a) and (R1-b), is usually of at least 1 %, preferably at least 5 %, more preferably at least 20 %, still more preferably at least 30 % and most preferably at least 40 %. On the other hand, in the mix (MB), the mole ratio of the recurring units (R1-b), based on the total number of moles of the recurring units (R1-a) and (R1-b), is usually of at most 99 %, preferably at most 95 %, more preferably at most 80 %, still more preferably at most 70 % and most preferably at most 60 %.

Good results were obtained when the recurring units of choice (B) were a mix of p-phenylene substituted by a phenylketone group with unsubstituted m-phenylene, in a mole ratio of about 50:50.

The polyarylene (P1) may be notably a homopolymer, a random, alternating or block copolymer.

Optionally, the polyarylene (P1) may further comprise recurring units (R1*), different from recurring units (R1).

Recurring units (R1*) may contain or not at least one strong divalent electron withdrawing group linked on each of its ends to an arylene group. Non limitative examples of recurring units (R1*) free of such strong divalent electron withdrawing group are : 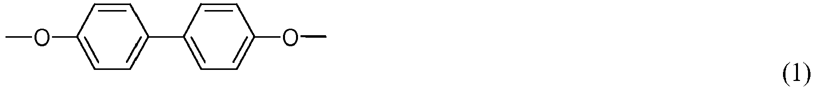 and

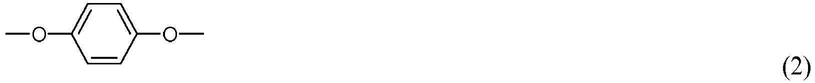

Recurring units (R1*) contain preferably at least one strong divalent electron withdrawing group linked on each of its ends to an arylene group, in particular a p-phenylene group. The divalent electron withdrawing group is preferably chosen from the sulfone group [-S(=O)₂-], the carbonyl group [-C(=O)-], the vinylene group [-CH=CH-], the sulfoxide group [-S(=O)-], the azo group [-N=N-], saturated fluorocarbon groups like -C(CF₃)₂-, organic phosphine oxide groups [-P(=O)(=Rₕ)-, where Rₕ is a hydrocarbyl group] and the ethylidene group [-C (=CA₂)-, where A can be hydrogen or halogen]. More preferably, the divalent electron withdrawing group is chosen from the sulfone group and the carbonyl group. Still more preferably, recurring units (R1*) are chosen from :
(i) recurring units of formula 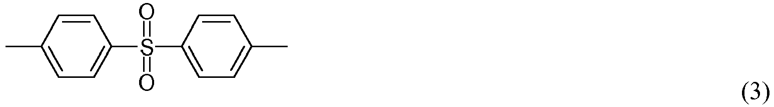
(ii) recurring units of formula 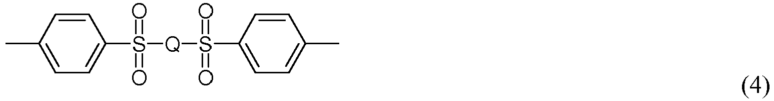 wherein Q is a group chosen from 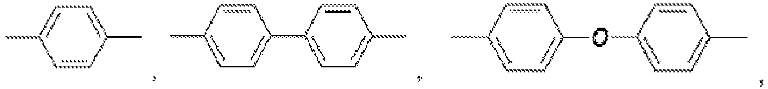 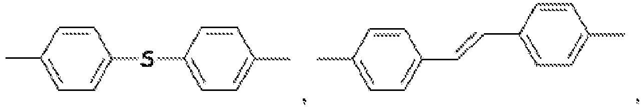 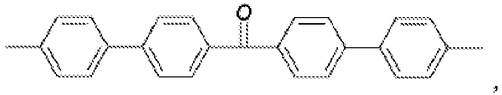 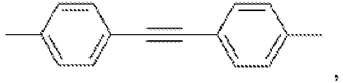 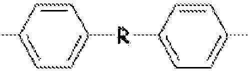 with R being: 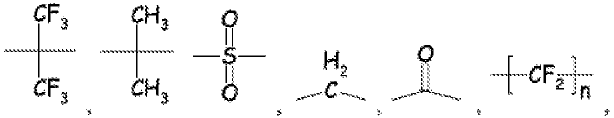 -(CH₂)_{n'}-,
   with n being an integer from 1 to 6 and n' being an integer from 2 to 6, Q being preferably chosen from 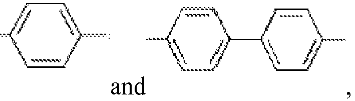
(iii) recurring units of formula 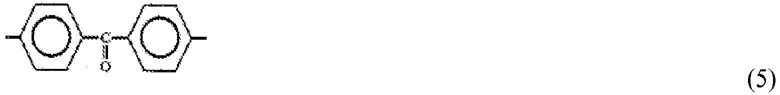
(iv) recurring units of formula 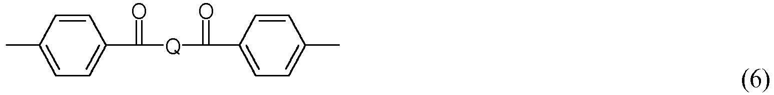 wherein Q is the group as above defined.

Preferably more than 25 wt. %, more preferably more than 50 wt. %, and still more preferably more than 90 wt. % of the recurring units of the polyarylene (P1) are recurring units (R1). Most preferably, essentially all, if not all, the recurring units of the polyarylene (P1) are recurring units (R1).

Excellent results were obtained when the polyarylene (P1) was a polyphenylene copolymer, essentially all, if not all, the recurring units of which consisted of a mix of p-phenylene substituted by a phenylketone group with unsubstituted m-phenylene in a mole ratio p-phenylene:m-phenylene of from 5:95 to 95:5, preferably of from 70:30 to 30:70, more preferably of from 60:40 to 40:60, and still more preferably of about 50:50. Such a polyphenylene copolymer is commercially available from Solvay Advanced Polymers, L.L.C. as PrimoSpire^{®} PR-250 polyphenylene, formerly known as PARMAX^{®} 1500.

Good results were also obtained when the polyarylene (P1) was a kinked rigid-rod polyphenylene copolymer, essentially all, if not all, the recurring units of which consisted of a mix (M1) of p-phenylene substituted by a phenylketone group with unsubstituted m-phenylene in a mole ratio p-phenylene:m-phenylene of from 75:25 to 99.0:1.0, preferably of from 79:21 to 95:5, more preferably of from 82:18 to 90:10, and still more preferably of about 85:15. Such a kinked rigid-rod polyphenylene copolymer is commercially available from Solvay Advanced Polymers, L.L.C. as PrimoSpire^{®} PR-120 polyphenylene, formerly known as PARMAX^{®} 1200.

The polyarylene (P1) has usually an absolute weight average molecular weight greater than 1,000, preferably greater than 5,000, more preferably greater than about 10,000 and still more preferably greater than 15,000. On the other hand, the absolute weight average molecular weight of the polyarylene (P1) is usually below 100,000, and preferably below 70,000, however in certain cases the polyarylene may have a high absolute weight average molecular weight of from 50,000 to 100,000, preferably from 60,000 to 90,000, or for 70,000 to 80,000. In a certain embodiment, the absolute weight average molecular weight of the polyarylene (P1) is above 35,000, preferably between 25,000 and 50,000. In another embodiment, it is at most 35,000; in this embodiment, it is often of at most 25,000 and sometimes of at most 20,000. All values between the stated values are expressly included as if written out, for example, in the range 20,000-25,000, the values 21,000, 22,000, 23,000 and 24,000 absolute weight average molecular weight are expressly included herein. The absolute weight average molecular weight for each of the aforementioned values is determined as described herein.

The polyarylene (P1) can be amorphous (i.e. it has no melting point) or semi-crystalline (i.e. it has a melting point). It is preferably amorphous.

The polyarylene (P1) has a glass transition temperature of advantageously above 50°C, preferably above 120°C and more preferably above 150°C.

The polyarylene (P1) can be prepared by any method. A suitable method for preparing the polyarylene (P1) comprises polymerizing, preferably by reductive coupling, at least one dihaloarylene molecular compound consisting of one optionally substituted arylene group, which is linked on each of its two ends to one halogen atom, such as chlorine, bromine and iodine. The elimination of both halogen atoms from a dihaloarylene molecular compound results in the formation of an optionally substituted arylene group, suitable as a recurring unit (R1) of the polyarylene (P1).

Thus, for example :
- the elimination of both chlorine atoms from one molecule of p-dichlorobenzene, p-dichlorobiphenyl and their homologous of general formula Cl-(ϕ)_{N}-Cl, N being an integer from 3 to 10, results in the formation of respectively 1, 2 or N adjacent p-phenylene units ; thus, p-dichlorobenzene, p-dichlorobiphenyl and their homologous of general formula Cl-(ϕ)_{N}-Cl, N as above defined, can be polymerized, so as to form p-phenylene units ;
- 2,5-dichlorobenzophenone (p-dichlorobenzophenone) can be polymerized, so as to form 1,4-(benzoylphenylene) units ;
- 2,5-dichloro-4'-phenoxybenzophenone can be polymerized, so as to form 1,4-(4'-phenoxybenzoylphenylene) units ;
- m-dichlorobenzene can be polymerized, so as to form m-phenylene units.

### Sterically Hindered Phenolic Stabilizer

As mentioned, the composition in accordance with the invention comprises at least one sterically hindered phenol stabilizer (e.g., the sterically hindered phenolic stabilizer described herein as HPS) which is an esterified hindered phenol substituted acid stabilizer and at least one polyarylene (e.g., the polyarylene (P1) described herein).

Sterically hindered phenol stabilizers are well known to those skilled in the art. The sterically hindered phenolic stabilizer (HPS) contained in the polyarylene composition of the invention is an esterified hindered phenol substituted acid stabilizer. It can be viewed as a phenol derivative wherein the hydroxy substituent of the phenol cycle is sterically hindered by at least one bulky group fixed to a carbon atom in position ortho to the carbon atom bearing the hydroxy group of the phenol cycle (Rg). Advantageously, the hydroxy substituent of the phenol cycle is sterically hindered by at least two bulky groups, at least one first bulky group being fixed to a carbon atom in position ortho to the carbon atom bearing the hydroxy group of the phenol cycle (Rg) and at least one other bulky group being fixed either to the other carbon atom in position ortho to the carbon atom bearing the hydroxy group of the phenol cycle (Rₕ), or to the carbon atom in position meta to the carbon atom bearing the hydroxy group and in position para to the first bulky group (Rᵢ). Preferably, the hydroxy substituent of the phenol cycle is sterically hindered by two bulky groups, the first bulky group being fixed to a carbon atom in position ortho to the carbon atom bearing the hydroxy group of the phenol cycle (Rg) and the other bulky group being fixed to the other carbon atom in position ortho to the carbon atom bearing the hydroxy group of the phenol cycle (Rₕ). Any bulky group capable of sterically hindering the hydroxy substituent of the phenol cycle is in principle suitable for use as the bulky groups R_{g}, Rₕ and Rᵢ, as long as its chemical nature does not affect detrimentally the properties of the polymer composition.

Bulky groups suitable for use as the bulky groups R_{g}, Rₕ and Rᵢ include advantageously C₁-C₃₀ hydrocarbyls, acyclic C₂-C₃₀monovalent groups comprising at least one heteroatom (such as -CH₂-OCH₃ and-CH₂-C(=O)OCH₃) and C₀₋₃₀ monovalent groups comprising at least one heterocycle such thiophene and pyridine cycles). Non limitative examples thereof include :
- C₂-C₃₀ hydrocarbylketones [-C(=O)-R, where R is a hydrocarbyl group], such as C₂-C₃₀ alkylketones (in particular, phenylketone 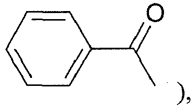 C₇-C₃₀ arylketones, C₈-C₃₀ alkylarylketones and C₈-C₃₀ aralkylketones ;
- C₃-C₃₀ hydrocarbyloxyhydrocarbylketones [-C(=O)-R¹-O-R², where R¹ is a divalent hydrocarbon group], such as aryloxyarylketones (in particular, phenyloxyphenylketone) ; and
- monovalent mono- or polycyclic groups comprising at least one cycle including one or more nitrogen atoms, such as :

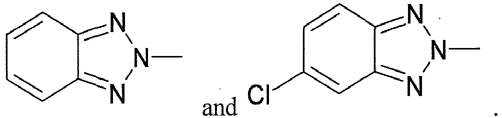

The bulky group Rg is advantageously a C₁-C₃₀ hydrocarbyl. Similarly, the bulky group Rₕ, when present, is advantageously a C₁-C₃₀ hydrocarbyl. Similarly, the bulky group Rᵢ, when present, is advantageously a C₁-C₃₀ hydrocarbyl.

As C₁-C₃₀ hydrocarbyl groups suitable for use as the bulky groups Rg, Rₕ and R₁, it can be cited :
- C₁-C₃₀ alkyls, such as methyl, ethyl and C₃-C₁₀ alkyls,
- C₆-C₃₀ aryls, such as phenyl,
- C₆-C₃₀ alkylaryls (such as tolyl), and
- C₆-C₃₀ aralkyls, such as -C(CH₃)₂-Phi, where Phi is phenyl.

Preferably, R_{g}, as well as Rₕ and Rᵢ when present, are, independently from each other, C₁-C₁₀ alkyls.

More preferably, they are selected from the group of α-branched alkyl groups of from 3 to 30 carbon atoms and α-branched aralkyl groups of from 6 to 30 carbon atoms. By the term "α-branched alkyl group" is intended one in which the carbon atom of the alkyl group which is bound to a carbon atom of the phenol cycle is also bound to at least two other carbon atoms of the alkyl group. By the term "α-branched aralalkyl group" is intended one in which the carbon atom of the aralalkyl group which is bound to a carbon atom of the phenol cycle is also bound to at least two other carbon atoms of the aralkyl group.

Still more preferably, they are α-branched alkyl groups of from 3 to 10 carbon atoms. Examples thereof include : isopropyl, sec-butyl, tert-butyl, 1-methyl-pentyl and tert-pentyl.

The most preferably, Rg, as well as Rₕ and Rᵢ when present, are tert-butyl [-C(CH₃)₃].

Excellent results were obtained when Rg was tert-butyl, Rₕ was present and Rₕ was also tert-butyl, and Rᵢ was absent.

The hindered phenol stabilizers (HPS) are selected among the class of esterified hindered phenol substituted acid stabilizers (the latter being disclosed more fully in US-A- 3,285,855 and US-A-3,644,482 (the entire content of each being also expressly incorporated hereinto by way of reference).

Examples of esterified hindered phenol substituted acid stabilizers are:
- esters of β-(3,5-di-tert-butyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like;
- esters of β-(5-tert-butyl-4-hydroxy-3-methylphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like;
- esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like;
- esters of 3,5-di-tert-butyl-4-hydroxyphenylacetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like.

Among these, the esters of β-(3,5-di-tert-butyl-4-hydroxyphenyl)propionic acid with polyhydric alcohols are especially preferred. The most preferred hindered phenol stabilized (HPS) which may be incorporated successfully into the composition of the invention is pentaerythritol tetrakis [3-(3,5-di-t-butyl-4-hydroxyphenyl)propionate] commercially available from Ciba Specialty Chemicals under the trade name Irganox^{®} 1010.

The weight percent of the hindered phenol stabilizer (HPS) based on the total weight of the composition is generally at least 0.05 wt.%, preferably of at least 0.1 wt.%. Besides, the weight percent of the hindered phenol stabilizer (HPS) based on the total weight of the polymer composition is generally of at most 5 wt.%, and preferably of at most 2.5 wt.%. In some embodiments the hindered phenol stabilizer is present in amounts of at least 0.15 wt.%, at least 0.2 wt.%, at least 0.25 wt.%, at least 0.3 wt.%, at least 0.35 wt.%, at least 0.4 wt.%, at least 0.45 wt.%, at least 0.5 wt.%, at least 0.55 wt.%, at least 0.6 wt.%, at least 0.65 wt.%, at least 0.7 wt.%, at least 0.75 wt.%, at least 0.8 wt.%, at least 0.85 wt.%, at least 0.9 wt.%, at least 0.95 wt.%, at least 1.0 wt.%, at least 2.0 wt.%, at least 3.0 wt.%, or at least 4.0 wt.% and at most 0.2 wt.%, preferably at most 0.25 wt.%, at most 0.3 wt.%, at most 0.35 wt.%, at most 0.4 wt.%, at most 0.45 wt.%, at most 0.5 wt.%, at most 0.55 wt.%, at most 0.6 wt.%, at most 0.65 wt.%, at most 0.7 wt.%, at most 0.75 wt.%, at most 0.8 wt.%, at most 0.85 wt.%, at most 0.9 wt.%, at most 0.95 wt.%, at most 1.0 wt.%, at most 2.0 wt.%, at most 3.0 wt.%, or at most 4.0 wt.%. All values and ranges between the stated values and/or ranges are expressly included as if written out.

In a certain preferred embodiment, the polyarylene composition of the invention consists of the polyarylene and the sterically hindered phenolic stabilizer, i.e. it does not contain any other ingredient. In another preferred embodiment of the invention, the polyarylene composition consists essentially of the polyarylene and the sterically hindered phenolic stabilizer, i.e. it may be free of any other ingredient or it may comprise one or more further ingredients in amounts that do not materially affect any of the properties of the polyarylene composition, including the tensile strength, tensile modulus, tensile elongation at break, melt flow rate and colour. In still another preferred embodiment of the invention, the polyarylene composition consists essentially of the polyarylene, the sterically hindered phenolic stabilizer and one or more pigments or dyes.

In other embodiments the polyarylene composition of the invention contains one or more of fibrous, lamellar or particulate fillers and/or reinforcements. Fibrous fillers and/or reinforcements include glass fiber, silica-alumina fiber, alumina fiber, carbon fiber and aramid fiber. Examples of lamellar or particulate fillers and/or reinforcements may include talc, mica, graphite, wollastonite, calcium carbonate, dolomite, clay, glass flake, glass beads, barium sulfate and titanium oxide. Particulate fillers having a high thermal conductivity are preferred. Preferable compositions include mixtures of materials in which the polyarylene composition of the invention is the only organic thermoplastic material and is present in amounts of at least 50% by weight based on the total weight of the composition.

The fillers and/or reinforcements are present in compositions of the polyarylene composition of the invention in amounts of 0.1-200 parts by weight, preferably 10-100 parts by weight per 100 parts by weight of the polyarylene. If the amount of the fillers and/or reinforcements is more than 200 parts by weight, the moldability of the resulting polyarylene composition tends to be decreased or the ablation of the cylinder or die of the molding device tends to be increased.

The polyarylene composition of the invention may further include one or more additives, which are conventionally used for thermoplastic compositions, if desired. For example, molding lubricant such as higher aliphatic acid, higher aliphatic ester, higher aliphatic amide, higher aliphatic acid metal salt (wherein, the term "higher" means 10 to 25 carbon atoms), polysiloxane and fluorocarbon resin; colorant such as dyes and pigments; antioxidant; thermal stabilizer; UV absorbent; antistatic agent; and surface active agent may be admixed. These additives may be present in the polyarylene composition of the invention in an amount of 0.005-1 parts by weight, preferably 0.01-0.5 parts by weight per 100 parts by weight of the polyarylene.

Molding lubricants such as higher aliphatic acid, higher aliphatic ester, higher aliphatic acid metal salt or fluorocarbon-type surfactant may be added to the polyarylene composition of the invention before subjecting the pellets to processing, so that the agent adheres to the outer surface of the pellet. Optionally the wholly aromatic LCP-containing composition contains one or more thermal stabilizers, whiteners or optical brighteners. Optical brighteners include bisbenzoxazoles, phenylcoumarins and bisstearylbiphenyls, in particular phenylcoumarin, and particularly preferably triazine phenylcoumarin, commercially available as Tinopal™ (Ciba-Geigy, Basle, Switzerland), or Hostalux™ KS (Clariant, Germany), or Eastobrite™ OB-1 (Eastman).

In other embodiments of the invention the polyarylene composition comprises one or more additional thermoplastic polymers. For example the polyarylene composition of the invention may include any one or more of a polyolefin, a polycarbonate, a polyphenylsulfone, a polysulfone, a polyaryletherketone and/or a polyetherimide, such as, for example, Radel^{®} R, Radel^{®} A, Ultem^{®}, Udel^{®} and/or Makrolon^{®} polymers.

Such blends of the polyarylene composition of the invention and one or more additional thermoplastic polymers may contain the polyarylene as a major (e.g., more than 50 wt%) or minor (e.g., less than 50 wt%) amount. The blends may contain the polyarylene composition in an amount of 5 wt%, 10 wt%, 20 wt%, 30 wt%, 40 wt%, 50 wt%, 60 wt%, 70 wt%, 80 wt%, 90 wt% or 95 wt% based on the total weight of the blend.

In another embodiment of the invention, the polyarylene composition comprises at least one flow modifier. The flow modifier is advantageously an organic substance having a molecular weight of from 100 to 1,000 g/mol, and may be one or more of a paraffin, olefin, olefin oligomer, optionally alkoxylated acyclic carboxylic acid, acyclic carboxylic acid ester, acyclic carboxylic acid alkali metal salt, optionally alkoxylated acyclic alcohol and optionally alkoxylated alkyl phenol. The organic substance preferably has a hydrocarbon chain containing from 8 to 70 carbon atoms, more preferably from 12 to 24 carbon atoms. In a certain preferred sub-embodiment, the polyarylene composition of the invention consists of the polyarylene, the sterically hindered phenolic stabilizer and the flow modifier. In another preferred sub-embodiment of the invention, the polyarylene composition consists essentially of the polyarylene, the sterically hindered phenolic stabilizer and the flow modifier. In still another preferred embodiment of the invention, the polyarylene composition consists essentially of the polyarylene, the sterically hindered phenolic stabilizer, the flow modifier and one or more pigments or dyes.

The invention includes a method of forming molded objects (e.g., moldings) from a polyarylene in a manner that reduces discoloration of the molding. In the method of the invention a polyarylene is melted in the presence of the sterically hindered phenolic stabilizer in an amount of at least 0.05% by weight on the total weight of the polyarylene composition. The polyarylene may be mixed with the sterically hindered phenolic stabilizer as part of the melting or the polyarylene may already contain the sterically hindered phenolic stabilizer before the melting of the process of the invention is carried out.

The sterically hindered phenolic stabilizer is present in the molten polyarylene in an amount effective for inhibiting the formation of ketyl radicals and/or in an amount effective for trapping and/or quenching any ketyl radicals formed during the melting of the polyarylene. The amount of the sterically hindered phenolic stabilizer necessary to be effective can be readily determined by visual inspection of the molding. The amount of the sterically hindered phenolic stabilizer can be adjusted until an acceptably colored molding is obtained. The amounts may be within the ranges of the amount of the sterically hindered phenolic stabilizer that may be present in the polyarylene composition of the invention described herein.

The melting may be carried out by subjecting the polyarylene and/or a polyarylene composition to a molding process such as injection molding, extrusion molding and/or compression molding. In the process of the invention melting may include heating the polyarylene or the polyarylene composition to a temperature that is greater than the glass transition temperature of the polyarylene or to a temperature that is sufficient to permit the molding of the polyarylene under the pressure conditions of injection molding.

In another embodiment of the process of the invention, the sterically hindered phenolic stabilizer is present in an amount effective to inhibit crosslinking of the polyarylene. Preferably the molding comprises less than 0.1 mol% of crosslinked polyarylene.

Another aspect of the present invention is related to articles comprising at least one part comprising the invented polyarylene composition that includes one or more polyarylenes (P1) and one or more sterically hindered phenolic stabilizers (HPS). Such article may be made by various methods known in the art. For example, it may be made by extrusion, injection molding, compression molding, injection compression molding, intrusion, fused deposition modeling or selective laser sintering or other techniques known to those skilled in the art. The invented composition is especially well suited for the manufacture of a wide range of articles, and in particular of films, fibers, rods, sheets, slabs, coatings, membranes, cables, tubes and foams.

### EXAMPLES

Yellowness index was measured according to ASTM D-1925.

Plaques were molded according to ASTM D-1925 color chips. Thickness of the molded color chips was 0.1 inch (2.5 mm).

Absolute weight average molecular weights (M_{w}) and intrinsic viscosities (IV) were measured at 65°C on a Viscotek TDA 302 triple detector array in line with a GPC system using NMP/0.5% LiBr as the eluent with Viscotek I-series columns (I-guard, IMBLMW-1078 (up to 2x104 PS), and I-MBHMW-3078 (up to 106 g/mol PS) in series). The refractive index increment of PrimoSpire in this eluent, dn/dc = 0.240, was used for all calculations.

34.5 g of a polyarylene powder of which the recurring units consist essentially of unsubstituted m-phenylene units and p-phenylene units substituted by a phenylketone group and (commercially available from Solvay Advanced Polymers as PrimoSpire^{®} PR-120) was compression molded to form 4" x 4" plaques. The plaques had a noticeable purple color over the majority of their flat large surfaces. Discoloration varied from purple to yellow-green. Compression molding at a molding temperature of 670°F and residence times that included 45 min of heat up and 45 min of cool down resulted in the formation of complete purple surface color in a 4" x 4" plaque.

Reducing the mold temperature to 650°F resulted in test plaques having a mixture of both purple and yellow-green surfaces. A further reduction in compression molding temperature to 620°F and a reduction in residence time to 15 min provided yellow colored plaques.

The UV-Vis spectra of the discolored surfaces were measured. The purple regions had a peak at 540 nm characteristic of the benzophenone ketyl radical species. This peak was observed only in the purple color region of the plaque and not in the yellow region of the plaque indicating that a benzophenone ketyl radical species was at least temporarily trapped in the polymer matrix or purple regions of the plaque. Figure 1 shows a UV-Vis spectrum for a test plaque with measurements taken at purple and yellow regions. All of the polymers were analyzed for metals and found to be within the set specification of less than 10 ppm Nickel and Zinc.

Similar purple coloration was observed in a second polyarylene commercially available from Solvay Advanced Polymers as PrimoSpire^{®} PR-250, of which the recurring units are essentially of the same two types as the above tested PrimoSpire^{®} PR-120, however in a higher m-phenylene over p-phenylene mole ratio). Purple discoloration is readily observed with the human eye. Compression molding at resulted in test plaques having a golden yellow color. Compression molding at 620°F PrimoSpire^{®} PR-250 pellets under normal conditions (620°F with no blanket of N₂), provided a low color polymer plaque with streaks of purple in the polymer matrix.

The effect of the sterically hindered phenolic stabilizer was measured by determining the yellowness index of molded parts. A series of compounding experiments incorporating various thermal stabilizers was performed as shown in Table 1. The compounded pellets from the experiments were molded in to color chips as per ASTM D-1925. The thickness of these color chips was 0.1 inches (2.5 mm). The yellowness index was measured on a Gretag-Macbeth colorimeter. The amount and type of stabilizer was varied to find synergistic effects of stabilizers. Certain stabilizers gave improved color consistency as measured by the yellowness index. Table 1 shows specific results associated with PrimoSpire^{®} PR-250 polyarylene resin. The same effects were observed with PrimoSpire^{®} PR-120 polyarylene resin.

The results are shown in Table 1 below:

| **PrimoSpire^{®} PR-250 with Stabilizers** | **YI** | **MFR @ 380°C 5 kg** | **Tensile Strength (psi)** | **Nominal Strain @ Break (%)** | **Modulus (kpsi)** | **VR₄₀** |
|---|---|---|---|---|---|---|
| No stabilizer control | 275 | 3 | 22000 | 6 | 800 | 1.1 |
| 0.5 wt% Irganox^{®} 1010 | 124 | 12.1 | 22100 | 9.54 | 796 | 1.09 |
| 0.25 wt% Irganox^{®} 1010 & 0.25 wt% Irgafos^{®} 168 | 137 | 3.1 | 22400 | 13.1 | 787 | 1.08 |
| 0.25wt% Irganox^{®} 1010 & 0.25wt% Irgafos^{®} 12 | 181 | 3.01 | 22220 | 14.5 | 805 | 1.1 |
| 0.15 wt% Irgafos^{®} 12 & 0.1% Irganox^{®} MD1024 | 242 | 7.28 | 21800 | 11.1 | 812 | 1.12 |
| 0.25 wt% Irganox^{®} 1010 & 0.25 wt% PEPQ | >250 | | | | | |
| 0.25 wt% (80% Irganox^{®} 1010 & 20% PEPQ) | >250 | | | | | |
| 0.25 wt% PEPQ | >250 | | | | | |
| **PrimoSpire^{®} PR-120 w/ 0.25 wt % PEPQ** | >250 | | | | | |

As can be seen from Table 1 above, the inclusion of a sterically hindered phenolic stabilizer (Irganox 1010) provides a composition having the lowest yellowness index, more than a 50% reduction in yellowness index in comparison to the base resin without stabilizer. Compositions containing a thermal stabilizer that is not a sterically hindered phenolic stabilizer, e.g., conventional stabilizers such as Irgafos^{®} 12 (i.e., 2-[[2,4,8,10-Tetrakis(1,1-dimethylethyl)dibenzo[d,f][1,3,2]dioxaphosphepin- 6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine) and Irganox^{®} MD1024 (1,2-bis(3,5-di-tert-butyl-4-hydroxyhydrocinnamoyl)hydrazine) provided molded parts having substantially higher yellowness index. Irgafos^{®} 12 is a hindered amine stabilizer that is not a phenolic material.

Compositions containing only a phosphite stabilizer or a phosphite stabilizer that is not a sterically hindered phenol did not provide improvement in color consistency. For example, Table 1 shows that the inclusion of PEPQ provides a polyarylene composition having increased yellowness index. The same behavior was observed with Irgafos 168.

The tensile properties were tested according to ASTM D638 using 1/8 inch thick test specimens ; 8.5 inch long Type I specimens were employed.

The melt flow ratio (MFR) was measured at 380 °C and under a load of 5.0 kg in accordance with ASTM method D1238.

Melt thermal stability testing is a melt rheological test performed to assess the ability of a polymer material to experience exposure of the melt to excessive temperatures and/or for significant times without adverse effects on the polymer material. The melt thermal stability test was performed in a Dynesco LCR capillary rheometer capillary rheometer. The viscosity of the polymer material at 380 °C and 50 sec⁻¹ was measured initially after a 10 minute dwell time at 380 °C in the barrel of the rheometer. The molten polymer material was next allowed to sit in the barrel of the rheometer for an additional 30 minutes (and a total dwell time of 40 minutes) after which the viscosity was again measured and recorded. The 40-min/10-min viscosity ratio was referred to as VR₄₀ ; it is a measure of melt stability. Obviously, the closer the VR₄₀ number to unity, the more stable the polymer material is.

In addition to effect on yellowness index, the inventive stabilizer-containing compositions also showed unexpected effects on melt flow rate. For example, the addition of the sterically hindered phenol Irganox^{®} 1010 to a polyarylene material having an MFR of 3 g/10 min resulted in an MFR enhancement. In addition the same Irganox^{®} 1010-containing inventive composition showed improved ductility as evidence by an increase in the nominal strain at break. The tensile bar necked down before failure of the same sample.

Irgafos^{®} 168 is a phosphite having the following structure:

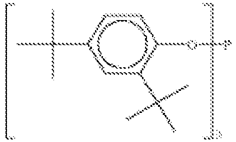

PEPQ is a stabilizer containing tetrakis-(2,4-di-tert-butyl-phenyl)-4,4'-biphenylphosphonite (Pep1) and other phosphorus-containing materials (Pep2, Pep3 and Pep4) shown below. 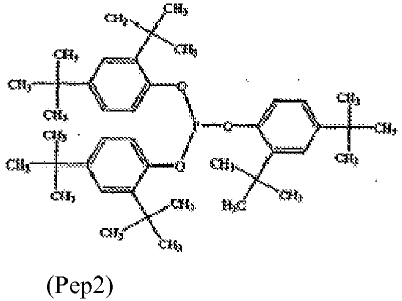 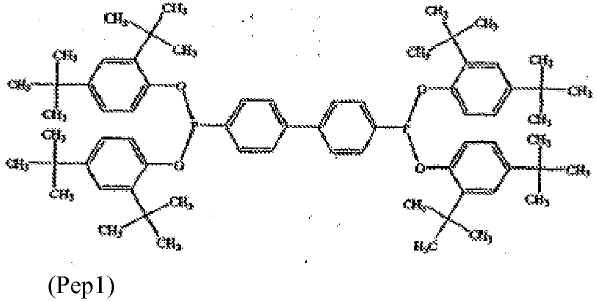 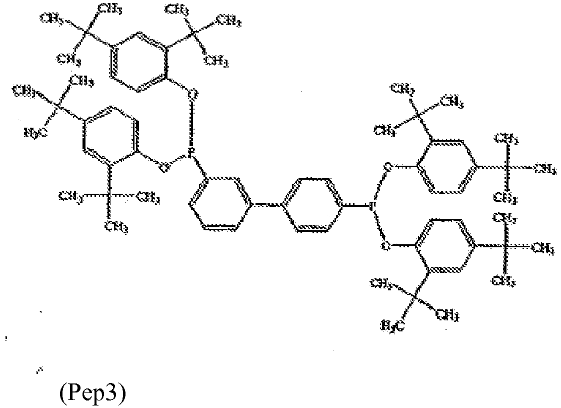 and

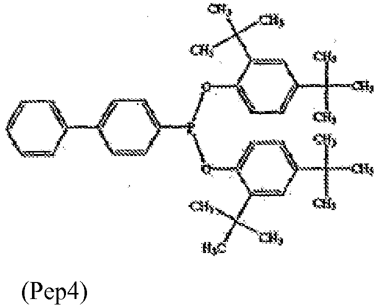

The inclusion of PEPQ in polyarylene compositions even together with the sterically hindered phenolic stabilizer of the invention does not improve color properties of the polyarylene composition.

## Claims

1. A polyarylene composition, comprising :
one or more polyarylenes (P1), and
one or more sterically hindered phenolic stabilizers, wherein the sterically hindered phenolic stabilizer is an esterified hindered phenol substituted acid stabilizer,
and the polyarylene composition shows an improvement in yellowness index measured according to ASTM D-1925 of at least 10% in comparison to the yellowness index measured according to ASTM D-1925 of a like composition that does not contain the sterically hindered phenolic stabilizer.

2. The polyarylene composition of Claim 1, wherein the polyarylene is a kinked rigid-rod polymer.

3. The polyarylene composition of Claim 1, wherein more than 50 wt. % of the recurring units of the polyarylene are recurring units (R1) of one or more formulae consisting of an optionally substituted arylene group,
said optionally substituted arylene group being linked by each of its two ends to two other optionally substituted arylene groups via a direct C-C linkage,
said recurring units (R1) being a mix (MB) of recurring units (R1-a) chosen from optionally substituted p-phenylenes, with recurring units (R1-b) chosen from (i) optionally substituted m-phenylenes and (ii) mixes of optionally substituted m-phenylenes with optionally substituted o-phenylenes.

4. The polyarylene composition of Claim 1, wherein the polyarylene is a polyphenylene essentially all the recurring units of which consist of a mix of p-phenylene substituted by a phenylketone group with unsubstituted m-phenylene in a mole ratio p-phenylene:m-phenylene of from 70:30 to 30:70.

5. The polyarylene composition of any one of Claims 1 to 4, further comprising :
one or more organic substances having a molecular weight of from 100 to 1,000 g/mol, said organic substances being selected from the group consisting of a paraffin, an olefin, an olefin oligomer, an alkoxylated acyclic carboxylic acid, an alkoxylated acyclic carboxylic acid amide, an acyclic carboxylic acid, an acyclic carboxylic acid ester, an acyclic carboxylic acid alkali metal salt, an acyclic carboxylic acid amide, an alkoxylated acyclic alcohol, an acyclic alcohol, an alkoxylated alkyl phenol and an alkyl phenol.

6. The polyarylene composition of any one of Claims 1 to 4, which consists essentially of the polyarylene, the sterically hindered phenolic stabilizer, and, optionally in addition, one or more pigments or dyes.

7. The polyarylene composition of any one of Claims 1 to 6, wherein the sterically hindered phenolic stabilizer is selected from the group consisting of esters of β-(3,5-di-tert-butyl-4-hydroxyphenyl)propionic acid with mono- or poly-hydric alcohols.

8. The polyarylene composition of any one of Claims 1 to 6, wherein the sterically hindered phenolic stabilizer is pentaerythritol tetrakis(3-(3,5-di-tert-butyl-4-hydroxyphenol)propionate).

9. The polyarylene composition of any one of the preceding Claims, wherein the polyarylene is present in an amount of at least 98 % by weight based on the total weight of the polyarylene composition, and the sterically hindered phenolic stabilizer is present in an amount of at least 0.05 % by weight based on the total weight of the polyarylene composition.

10. The polyarylene composition of any one of the preceding Claims, having a yellowness index of less than 150.

11. The polyarylene composition of any one of Claims 1-5 and 7-10, further comprising :
at least one thermoplastic polymer selected from the group consisting of a polyolefin, a polycarbonate, a polyphenylsulfone, a polysulfone, a polyaryletherketone and a polyetherimide.

12. A process for making a molding comprising one or more polyarylenes, comprising :
melting the polyarylenes in the presence of one or more sterically hindered phenol stabilizers in an amount of at least 0.05% by weight on the total weight of the polyarylene composition to inhibit the formation of ketyl radicals, to obtain a molten polyarylene composition ; then
forming the molding from the molten polyarylene composition; then cooling and solidifying the molding,
wherein the sterically hindered phenolic stabilizer is an esterified hindered phenol substituted acid stabilizer,

13. An article made from the polyarylene composition according to anyone of Claims 1 to 11.

14. The article according to Claim 13, which is a foam wherein the polyarylene composition further comprises :
one or more organic substances having a molecular weight of from 100 to 1,000 g/mol, said organic substances being acyclic alcohols, and
at least one thermoplastic polymer which is a polyphenylsulfone.

## Patentansprüche

1. Polyarylenzusammensetzung, umfassend :
ein oder mehrere Polyarylene (P1) und
einen oder mehrere sterisch gehinderte phenolische Stabilisatoren, wobei es sich bei dem sterisch gehinderten phenolischen Stabilisator um einen veresterten gehinderten phenolsubstituierten Säurestabilisator handelt
und die Polyarylenzusammensetzung eine Verbesserung des gemäß ASTM D-1925 gemessenen Gelbwerts von mindestens 10 % im Vergleich zu dem gemäß ASTM D-1925 gemessenen Gelbwert einer gleichartigen Zusammensetzung ohne den sterisch gehinderten phenolischen Stabilisator zeigt.

2. Polyarylenzusammensetzung nach Anspruch 1, wobei es sich bei dem Polyarylen um ein geknicktes Rigid-Rod-Polymer handelt.

3. Polyarylenzusammensetzung nach Anspruch 1, wobei es sich bei mehr als 50 Gew.- % der Wiederholungseinheiten des Polyarylens um Wiederholungseinheiten (R1) einer oder mehrerer Formeln, die aus einer gegebenenfalls substituierten Arylengruppe bestehen, handelt,
wobei die gegebenenfalls substituierte Arylengruppe durch jedes ihrer beiden Enden über eine direkte C-C-Verknüpfung mit zwei anderen gegebenenfalls substituierten Arylengruppe verknüpft ist,
wobei es sich bei den Wiederholungseinheiten (R1) um eine Mischung (MB) von Wiederholungseinheiten (R1-a), die aus gegebenenfalls substituierten p-Phenylenen ausgewählt sind, mit Wiederholungseinheiten (R1-b), die aus (i) gegebenenfalls substituierten m-Phenylenen und (ii) Mischungen von gegebenenfalls substituierten m-Phenylenen mit gegebenenfalls substituierten o-Phenylenen ausgewählt sind.

4. Polyarylenzusammensetzung nach Anspruch 1, wobei es sich bei dem Polyarylen um ein Polyphenylen handelt, dessen Wiederholungseinheiten im Wesentlichen alle aus einer Mischung von p-Phenylen, das durch eine Phenylketongruppe substituiert ist, mit unsubstituiertem m-Phenylen in einem Molverhältnis p-Phenylen:m-Phenylen von 70:30 bis 30:70 bestehen.

5. Polyarylenzusammensetzung nach einem der Ansprüche 1 bis 4, ferner umfassend :
eine oder mehrere organische Substanzen mit einem Molekulargewicht von 100 bis 1000 g/mol, wobei die organischen Substanzen aus der Gruppe bestehend aus einem Paraffin, einem Olefin, einem Olefin-Oligomer, einer alkoxylierten acyclischen Carbonsäure, einem alkoxylierten acyclischen Carbonsäureamid, einer acyclischen Carbonsäure, einem acyclischen Carbonsäureester, einem Alkalimetallsalz einer acyclischen Carbonsäure, einem acyclischen Carbonsäureamid, einem alkoxylierten acyclischen Alkohol, einem acyclischen Alkohol, einem alkoxylierten Alkylphenol und einem Alkylphenol ausgewählt sind.

6. Polyarylenzusammensetzung nach einem der Ansprüche 1 bis 4, die im Wesentlichen aus dem Polyarylen, dem sterisch gehinderten phenolischen Stabilisator und gegebenenfalls zusätzlich einem oder mehreren Pigmenten oder Farbstoffen besteht.

7. Polyarylenzusammensetzung nach einem der Ansprüche 1 bis 6, wobei der sterisch gehinderte phenolische Stabilisator aus der Gruppe bestehend aus Estern von β-(3,5-Di-tert-butyl-4-hydroxyphenyl)propionsäure mit ein- oder mehrwertigen Alkoholen ausgewählt ist.

8. Polyarylenzusammensetzung nach einem der Ansprüche 1 bis 6, wobei es sich bei dem sterisch gehinderten phenolischen Stabilisator um Pentaerythrittetrakis(3-(3,5-di-tert-butyl-4-hydroxyphenol)propionat) handelt.

9. Polyarylenzusammensetzung nach einem der vorhergehenden Ansprüche, wobei das Polyarylen in einer Menge von mindestens 98 Gew.- %, bezogen auf das Gesamtgewicht der Polyarylenzusammensetzung, vorliegt und der sterisch gehinderte phenolische Stabilisator in einer Menge von mindestens 0,05 Gew.- %, bezogen auf das Gesamtgewicht der Polyarylenzusammensetzung, vorliegt.

10. Polyarylenzusammensetzung nach einem der vorhergehenden Ansprüche mit einem Gelbwert von weniger als 150.

11. Polyarylenzusammensetzung nach einem der Ansprüche 1-5 und 7-10, ferner umfassend :
mindestens ein thermoplastisches Polymer aus der Gruppe bestehend aus einem Polyolefin, einem Polycarbonat, einem Polyphenylsulfon, einem Polysulfon, einem Polyaryletherketon und einem Polyetherimid.

12. Verfahren zur Herstellung eines Formkörpers, der ein oder mehrere Polyarylene umfasst, das Folgendes umfasst :
Schmelzen der Polyarylene in Gegenwart eines oder mehrerer sterisch gehinderter Phenolstabilisatoren in einer Menge von mindestens 0,05 Gew.-%, bezogen auf das Gesamtgewicht der Polyarylenzusammensetzung, zur Inhibierung der Bildung von Ketylradikalen, wobei man eine schmelzflüssige Polyarylenzusammensetzung erhält; dann
Formen des Formkörpers aus der schmelzflüssigen Polyarylenzusammensetzung; dann
Abkühlen und Verfestigen des Formkörpers,
wobei es sich bei dem sterisch gehinderten phenolischen Stabilisator um einen veresterten gehinderten phenolsubstituierten Säurestabilisator handelt.

13. Artikel, hergestellt aus der Polyarylenzusammensetzung nach einem der Ansprüche 1 bis 11.

14. Artikel nach Anspruch 13, bei dem es sich um einen Schaumstoff handelt, wobei die Polyarylenzusammensetzung ferner Folgendes umfasst :
eine oder mehrere organische Substanzen mit einem Molekulargewicht von 100 bis 1000 g/mol, wobei es sich bei den organischen Substanzen um acyclische Alkohole handelt, und
mindestens ein thermoplastisches Polymer, bei dem es sich um ein Polyphenylsulfon handelt.

## Revendications

1. Composition de polyarylène, comprenant :
un ou plusieurs polyarylènes (P1), et
un ou plusieurs stabilisants phénoliques stériquement encombrés, le stabilisant phénolique stériquement encombré étant un stabilisant acide substitué par un phénol estérifié encombré,
et la composition de polyarylène présentant une amélioration de l'indice de jaunissement mesuré selon l'ASTM D-1925 d'au moins 10 % par rapport à l'indice de jaunissement mesuré selon l'ASTM D-1925 d'une composition similaire qui ne contient pas le stabilisant phénolique stériquement encombré.

2. Composition de polyarylène de la revendication 1, dans laquelle le polyarylène est un polymère à tige rigide entortillée.

3. Composition de polyarylène de la revendication 1, dans laquelle plus de 50 % en poids des motifs récurrents du polyarylène sont des motifs récurrents (R1) d'une ou plusieurs formules consistant en un groupe arylène optionnellement substitué,
ledit groupe arylène optionnellement substitué étant lié par chacune de ses deux extrémités à deux autres groupes arylène optionnellement substitués par une liaison C-C directe,
lesdits motifs récurrents (R1) étant un mélange (MB) de motifs récurrents (R1-a) choisis parmi les p-phénylènes optionnellement substitués, avec des motifs récurrents (R1-b) choisis parmi (i) les m-phénylènes optionnellement substitués et (ii) les mélanges de m-phénylènes optionnellement substitués avec des o-phénylènes optionnellement substitués.

4. Composition de polyarylène de la revendication 1, dans laquelle le polyarylène est un polyphénylène dont essentiellement tous les motifs récurrents consistent en un mélange de p-phénylène substitué par un groupe phénylcétone avec un m-phénylène non substitué dans un rapport molaire p-phénylène:m-phénylène de 70:30 à 30:70.

5. Composition de polyarylène de l'une quelconque des revendications 1 à 4, comprenant en outre :
une ou plusieurs substances organiques ayant un poids moléculaire de 100 à 1000 g/mol, lesdites substances organiques étant choisies dans le groupe constitué par une paraffine, une oléfine, un oligomère oléfinique, un acide carboxylique acyclique alcoxylé, un amide d'acide carboxylique acyclique alcoxylé, un acide carboxylique acyclique, un ester d'acide carboxylique acyclique, un sel de métal alcalin d'acide carboxylique acyclique, un amide d'acide carboxylique acyclique, un alcool acyclique alcoxylé, un alcool acyclique, un alkylphénol alcoxylé et un alkylphénol.

6. Composition de polyarylène de l'une quelconque des revendications 1 à 4, qui est essentiellement constituée du polyarylène, du stabilisant phénolique stériquement encombré et optionnellement, en plus, d'un ou plusieurs pigments ou colorants.

7. Composition de polyarylène de l'une quelconque des revendications 1 à 6, dans laquelle le stabilisant phénolique stériquement encombré est choisi dans le groupe constitué par les esters d'acide β-(3,5-di-tert-butyl-4-hydroxyphényl)propionique avec des monoalcools ou des polyols.

8. Composition de polyarylène de l'une quelconque des revendications 1 à 6, dans laquelle le stabilisant phénolique stériquement encombré est le tétrakis(3-(3,5-di-tert-butyl-4-hydroxyphénol)propionate) de pentaérythritol.

9. Composition de polyarylène de l'une quelconque des revendications précédentes, dans laquelle le polyarylène est présent dans une quantité d'au moins 98 % en poids, rapporté au poids total de la composition de polyarylène, et le stabilisant phénolique stériquement encombré est présent dans une quantité d'au moins 0,05 % en poids, rapporté au poids total de la composition de polyarylène.

10. Composition de polyarylène de l'une quelconque des revendications précédentes, ayant un indice de jaunissement inférieur à 150.

11. Composition de polyarylène de l'une quelconque des revendications 1 à 5 et 7 à 10, comprenant en outre :
au moins un polymère thermoplastique choisi dans le groupe constitué par une polyoléfine, un polycarbonate, une polyphénylsulfone, une polysulfone, une polyaryléthercétone et un polyétherimide.

12. Procédé de fabrication d'un moulage comprenant un ou plusieurs polyarylènes, comprenant :
la fusion des polyarylènes en présence d'un ou plusieurs stabilisants phénoliques stériquement encombrés dans une quantité d'au moins 0,05 % en poids, rapporté au poids total de la composition de polyarylène, pour inhiber la formation de radicaux cétyle, pour obtenir une composition de polyarylène fondue ; puis
la formation du moulage à partir de la composition de polyarylène fondue ; puis le refroidissement et la solidification du moulage,
dans lequel le stabilisant phénolique stériquement encombré est un stabilisant acide substitué par un phénol estérifié encombré.

13. Article fabriqué à partir de la composition de polyarylène selon l'une quelconque des revendications 1 à 11.

14. Article selon la revendication 13, qui est une mousse dans laquelle la composition de polyarylène comprend en outre :
une ou plusieurs substances organiques ayant un poids moléculaire de 100 à 1000 g/mol, lesdites substances organiques étant des alcools acycliques, et
au moins un polymère thermoplastique qui est une polyphénylsulfone.
